# EUROPÄISCHE PATENTSCHRIFT

(11) **EP 2 156 070 B1**
(45) Veröffentlichungstag und Bekanntmachung des Hinweises auf die Patenterteilung: **16.07.2014**
(21) Anmeldenummer: 08758863.8
(22) Anmeldetag: 29.05.2008
(51) Int. Cl.: F16F 15/26

(54) **AUSGLEICHSWELLE**
BALANCING SHAFT
ARBRE DE COMPENSATION

(30) Priorität: 14.06.2007 DE 102007027990
(43) Veröffentlichungstag der Anmeldung: 24.02.2010
(73) Patentinhaber: Herzog Intertec GmbH, 78601 Mahlstetten (DE)
(72) Erfinder: HERZOG, Ewald, 78601 Mahlstetten (DE); HERZOG, Raphael, 78601 Mahlstetten (DE)
(74) Vertreter: Maser, Jochen
(86) Internationale Anmeldenummer: PCT/EP2008/004283
(87) Internationale Veröffentlichungsnummer: WO 2008/151723

(56) Entgegenhaltungen:
- EP-A- 0 789 166
- EP-A- 1 081 410
- WO-A-2005/093286
- DE-A1- 10 115 536
- DE-A1- 10 347 348
- FR-A- 2 823 279
- JP-A- 9 151 993
- US-A- 2 838 957

## Beschreibung

Die Erfindung betrifft eine Ausgleichswelle für einen Ein- oder Mehrzylindermotor gemäß dem Oberbegriff des Anspruchs 1.

Aus der EP 0 789 166 A1 sind Ausgleichswellen für einen Mehrzylindermotor bekannt geworden, welche durch ein Fest- und ein Loslager im Motorgehäuse gehalte sind. Die Ausgleichswellen weisen jeweils ein Ritzel auf, um diese Antriebswellen drehbar anzutreiben. Das Ritzel der Ausgleichswelle ist gemäß einer ersten Ausführungsform auf einem Rohr befestigt, in welches ein asymmetrisch ausgebildetes Ausgleichselement eingesteckt wird. Im Anschluss daran werden die jeweiligen stirnseitigen Enden des Rohres mit dem asymmetrischen Ausgleichselement verkrimpt, so dass die Ausgleichswelle aus einem im Wesentlichen geschlossenen Rohr besteht, in welchem ein halbzylindrisches Ausgleichselement als Unwucht angeordnet ist. Nach einer alternativen Ausführungsform ist vorgesehen, dass anstelle eines Rohres eine halbzylindrische Abdeckung vorgesehen ist, die ein halbzylindrisches Ausgleichselement vollständig abdeckt.

Solche Ausgleichswellen weisen zwar den Vorteil auf, dass ein konstruktiv einfacher Aufbau und eine einfache Montage gegeben ist, jedoch sind solche Ausgleichswellen aufgrund deren Gewicht nicht mehr zeitgemäß. Die Anforderungen an ein reduziertes Gewicht und somit reduzierter Kraftstoffverbrauch stehen mehr und mehr im Vordergrund, so dass solche gewichtsaufwändigen Konstruktionen nicht mehr wünschenswert sind.

Aus der WO 2005/093286 A1 ist eine Ausgleichswelle für einen Mehrzylindermotor bekannt, welcher wenigstens zwei Unwuchtgewichtsabschnitte und wenigstens eine Lagerstelle umfasst, wobei die Unwuchtgewichtsabschnitte symmetrisch zur Lagerstelle angeordnet sind und wenigstens einer der Unwuchtgewichtabschnitte mit einem von der Lagerstelle abgewandten Ende als antreibbares Ende für die Ausgleichswelle aufweist. Zwischen den beiden Lagerstellen mit deren symmetrisch dazu angeordneten Unwuchtgewichtsabschnitten ist ein biegeelastisches Koppelelement vorgesehen, um die beiden Abschnitte miteinander zu verbinden. Die Unwuchtgewichtabschnitte sind in etwa halbkreisförmig ausgebildet. Die Lagerstellen sind als kreiszylindrische Scheiben vorgesehen, wobei eine Hälfte der zylinderförmig ausgebildeten Lagerstelle gegenüber den Unwuchtgewichtsabschnitten frei hervorsteht. Zur Aussteifung dieser Ausgleichswelle sind in Längsrichtung der Ausgleichswelle sich erstreckende, T-förmig ausgebildete Streben vorgesehen, die sich von einer Rotationsachse aus an der Unwucht angreifend bis zu einem freien äußeren Randbereich der zylinderförmigen Lagerstelle erstrecken. Dadurch soll die Ausgleichswelle in Längsrichtung ausgesteift werden. Solche Ausgleichswellen sind teils gewichtsoptimiert ausgestaltet, jedoch ist aufgrund der immer höheren Drehzahlen in Mehrzylindermotoren erforderlich, dass die bewegten Massen weiter reduziert werden. Des Weiteren ist die Gewichtseinsparung in der Motorenentwicklung von wesentlicher Bedeutung, um verbesserte Leistungswerte zu erzielen.

Aus den JPH09151993 A ist eine Ausgleichswelle bekannt, gemäß dem Oberbegriff des Anspruchs 1.

Der Erfindung liegt deshalb die Aufgabe zugrunde, eine Ausgleichswelle zu schaffen, bei der eine Reduzierung des Gesamtgewichtes und der bewegten Massen unter Beibehaltung des Unwuchtausgleichs bei Ein- oder Mehrzylindermotoren gegeben ist.

Diese Aufgabe wird erfindungsgemäß durch die Merkmale des Anspruchs 1 gelöst. Weitere vorteilhafte Ausgestaltungen und Weiterbildungen sind in den weiteren abhängigen Ansprüchen angegeben.

Die erfindungsgemäße Ausgleichswelle weist den Vorteil auf, dass durch die partiell über einen Umfang der Lagerstelle ausgebildete Lauffläche eine erhebliche Gewichtsreduzierung an der Lagerstelle erzielt werden kann. Die Lagerstelle ist somit in Teilbereichen freigeschnitten. Dadurch können ein oder mehrere Unwuchtgewichtsabschnitte, die benachbart zur Lagerstelle vorgesehen sind, ebenfalls reduziert werden, so dass insgesamt eine Gewichtsreduzierung der Ausgleichwelle ermöglicht wird. Durch die erfindungsgemäße Anordnung eines Laufringsegmentes, welches die partielle Lauffläche durch die Stützfläche des Laufringsegmentes komplettiert oder überspannt, ist ermöglicht, dass solche gewichtsreduzierten Ausgleichswellen sowohl in konventionellen Motorgehäusen eingesetzt werden können, bei denen eine Schmierung der Lagerstelle über das Motorgehäuse erfolgt, als auch in neu entwickelten Motorgehäusen, die bevorzugt mit einer Wälzlagerung ausgeführt werden.

Des Weiteren weist die erfindungsgemäße Ausgestaltung den Vorteil auf, dass durch eine solche Lagerung eine hohe Lebensdauer ermöglicht wird. Unabhängig der Lage der partiell über ein Umfang der Lagerstelle ausgebildeten Lauffläche ist ein einfaches Anlaufen der Ausgleichswelle ermöglicht. Darüber hinaus wird trotz der Ausbildung von freitragenden Seitenkanten der Stützfläche, welche zu den durch die partiell ausgebildete Lauffläche weist, eine Ausgleichswelle mit einer hohen Laufruhe erzielt. Durch die erfindungsgemäße Ausgestaltung kann somit ein universeller Einsatz und eine erhebliche Gewichtseinsparung erzielt werden, die zwischen 20 % bis 40 % gegenüber einer herkömmlichen Ausgleichswelle liegen.

Nach einer vorteilhaften Ausgestaltung der Erfindung ist vorgesehen, dass das Laufringsegment und die partiell ausgebildete Lauffläche der Lagerstelle form- und/oder kraftschlüssig miteinander verbunden sind. Dadurch kann eine einfache Montage des Laufringsegmentes zur Lauffläche gegeben sein. Durch die formschlüssige Verbindung kann eine genaue Ausrichtung des Laufringsegmentes zur Lauffläche ermöglicht sein, wodurch die Montage erleichtert ist.

Nach einer weiteren vorteilhaften Ausgestaltung der Erfindung ist vorgesehen, dass das Laufringsegment mit der partiell ausgebildeten Lauffläche stoffschlüssig verbunden ist. Dabei können insbesondere Schweiß-verfahren beziehungsweise Press-Schweiß-Verfahren eingesetzt werden, die eine dauerhafte Anbindung des Laufringsegmentes zur Ausgleichswelle sicherstellen. Dadurch kann auch die Herstellung solcher Ausgleichswellen mit freigestellten Laufringsegmenten kostengünstig und präzise erfolgen. Alternativ kann ein Induktionsschweißen oder Löten oder dergleichen vorgesehen sein.

Nach einer vorteilhaften Ausgestaltung der Erfindung ist vorgesehen, dass die Lauffläche der Lagerstelle einen Umfangswinkel größer 180° aufweist und vorteilhafterweise sich innerhalb diesem Umfangswinkel durchgehend erstreckt.

Nach einer alternativen Ausgestaltung der Erfindung ist vorgesehen, dass die partiell ausgebildete Lauffläche der Lagerstelle einen Umfangswinkel aufweist, der gleich oder kleiner als 180° ist und sich innerhalb diesem Umfangswinkel vorteilhafterweise durchgehend erstreckt. Durch eine solche Reduzierung im Umfangswinkel kann eine weitere Gewichtsreduzierung der benachbarten Unwuchtgewichtsabschnitte und somit des Gesamtgewichtes erzielt werden.

Das Laufringsegment weist nach einer bevorzugten Ausgestaltung eine Stützfläche mit einer konstanten Breite auf. Dadurch können einfache geometrische Verhältnisse geschaffen werden. Die Breite der Stützfläche entspricht bevorzugt der Breite der Lauffläche, so dass eine einheitliche und durchgehende Gesamtfläche an der beziehungsweise den Lagerstellen geschaffen ist.

Nach einer weiteren vorteilhaften Ausgestaltung der Erfindung ist vorgesehen, dass die Stützfläche des Laufringsegmentes ein- oder beidseitig in der Breite sich verjüngend ausgebildet ist und vorzugsweise im Scheitelpunkt des Laufringsegmentes den engsten Querschnitt aufweist. Eine solche Verringerung des Querschnittes kann zusätzlich zur Massenreduzierung beitragen. Darüber hinaus kann eine verringerte Lagerreibung erzielt werden. Vorteilhafterweise ist im Übergangsbereich von der partiell ausgebildeten Lauffläche zum Laufringsegment eine gleiche Breite vorgesehen, so dass ein fließender Übergang gegeben ist.

Nach einer weiteren bevorzugten Ausgestaltung der Erfindung ist vorgesehen, dass im Anschlussbereich zwischen dem Laufringsegment und der Lauffläche eine Anlagefläche vorgesehen ist, die gegenüber der Lauffläche zur Rotationsachse hin versetzt ist. Dadurch kann eine definierte Aufnahme und Positionierung des Laufringsegmentes zur Ausgleichswelle ermöglicht werden. Es kann eine kraft- und/oder formschlüssige Vorfixierung gegeben sein. Dadurch kann die Montage und nachfolgende Fixierung des Laufringsegmentes zur Ausgleichswelle erleichtert werden.

Der Anschlussbereich an der jeweiligen Lagerstelle weist bevorzugt in Umfangsrichtung sich erstreckende Positionierelemente auf, die das Laufringsegment axial zur Lauffläche ausrichten. Dadurch kann eine exakte Positionierung des Laufringsegmentes zur Lagerstelle sichergestellt werden. Zusätzlich dient diese Vorfixierung zur vereinfachten Befestigung des Laufringsegmentes durch die insbesondere stoffschlüssige Verbindung zur Ausgleichswelle.

Nach einer weiteren vorteilhaften Ausgestaltung der Erfindung ist vorgesehen, dass die partiell ausgebildete Lauffläche und Stützfläche des Laufringsegmentes in axialer Richtung gesehen ballig ausgebildet sind. Dadurch können während dem Betrieb auftretende Biegebeanspruchungen zwischen den Lagerstellen sowie eine Verkantung oder Verkippung ohne Beschädigungen der Lagerstelle, wie beispielsweise einer Lagerbuchse, eines Lagerringes, Nadelrollen oder Zylinderrollen, aufgenommen werden.

Die Lagerstelle der Ausgleichswelle umfasst im Querschnitt zu deren Längsrichtung gesehen eine Vertiefung, die beispielsweise V-förmig, W-förmig, wannenförmig oder topfförmig ausgebildet ist. Solche Vertiefungen können unmittelbar bei der Herstellung der Ausgleichswelle durch Gießen, Schmieden, Pressen oder dergleichen als auch durch eine spanabhebende Bearbeitung eingebracht werden, so dass eine kostengünstige Herstellung solcher Lagerstellen bei gleichzeitiger Gewichtseinsparung ermöglicht ist.

Bevorzugt ist vorgesehen, dass die Vertiefung der Lagerstelle symmetrisch zur Längsrichtung der Ausgleichswelle ausgebildet ist. Dadurch ist ein konstruktiv einfacher Ausbau der Ausgleichswelle und insbesondere die Auslegung der Unwuchtgewichtsabschnitte ermöglicht.

Nach einer alternativen Ausgestaltung der Vertiefung ist vorgesehen, dass diese zusammen mit der nur teilweise über den Umfang sich erstreckenden Lauffläche der Lagerstelle eine Querschnittsfläche bilden, bei der die Rotationsachse im Querschnitt der Lagerstelle liegt. Diese Ausführungsform weist den Vorteil auf, dass eine Versteifung der Ausgleichswelle ermöglicht ist und somit die Ausgleichswelle für besondere Belastungen einsetzbar ist. In einem solchen Fall wird die etwas verringerte Gewichtseinsparung untergeordnet.

Nach einer alternativen Ausgestaltung der Erfindung ist vorgesehen, dass die Vertiefung in der Lagerstelle im Querschnitt gesehen zumindest einen mittleren Abschnitt aufweist der in der Rotationsachse der Ausgleichswelle liegt. Dadurch kann die Rotationsachse ausgesteift werden, wobei benachbart zu dem mittleren Abschnitt zumindest ein weiterer Vertiefungsabschnitt zur Gewichtseinsparung ausgebildet sein kann.

Eine weitere alternative Ausgestaltung der Lagerstelle sieht vor, dass die Lauffläche der Lagerstelle und die sich daran anschließende Vertiefung eine Querschnittsfläche bilden, bei der die Rotationsachse außerhalb der Querschnittsfläche liegt. Dadurch kann beispielsweise ein sichelförmiger Querschnitt der Lagerstelle erzielt werden. Ein solcher Querschnitt weist den Vorteil auf, dass dieser gleichzeitig als Schöpfer für die Schmierflüssigkeit wirkt und eingesetzt werden kann.

Eine weitere alternative Ausführungsform der Lagerstelle sieht vor, dass eine Vertiefung mit der partiell über den Umfang der Lagerstelle sich erstreckenden Lauffläche einen turbinenradförmigen oder asymmetrischen Querschnitt bilden. Dadurch ist die Förderung der Schmierflüssigkeit stark begünstigt.

Eine weitere vorteilhafte Ausgestaltung der Lagerstelle für die Ausgleichswelle sieht vor, dass die partiell sich über den Umfang erstreckenden Laufflächen symmetrisch zur resultierenden Zentrifugalkraft bei Rotation der Ausgleichswelle ausgebildet sind. Dadurch wirken die Lagerstellen selbst wie Unwuchtgewichtsabschnitte und können bei deren Berechnung für die Auslegung der Ausgleichswelle mit einbezogen werden.

Des Weiteren ist vorteilhafterweise vorgesehen, dass die Laufflächenbreite der partiell sich über den Umfang erstreckenden Lauffläche der Lagerstelle sich zu den Endabschnitten der Lauffläche zumindest abschnittsweise verjüngen. Anders ausgedrückt bedeutet dies, dass die Lauffläche im Wirkungsbereich der resultierenden Zentrifugalkraft eine größte Breite beziehungsweise Erstreckung in Achslängsrichtung der Ausgleichswelle aufweist und sich im und entgegen dem Uhrzeigersinn zu den freien Endabschnitten der Lauffläche in deren Breite zumindest abschnittsweise verjüngt. Dadurch kann eine zusätzliche Gewichtseinsparung und Verringerung der Lagerreibung erzielt werden. Die Breite der Lauffläche kann sich entlang des Umfangswinkels auch mehrfach ändern, so dass eine Verjüngung und eine Verbreiterung abwechselnd vorgesehen ist. Die verjüngte Breite der Lauffläche kann als Anschlussbreite für das Laufringsegment dienen, so dass die verjüngte Laufflächenbreite als Stützflächenbreite für das Laufringsegment übernommen und fortgesetzt wird.

Der Umfangswinkel der Laufflächen der ersten Lagerstelle ist gemäß einer vorteilhaften Ausgestaltung der Erfindung gleich zum Umfangswinkel der Lauffläche der zumindest einen weiteren Lagerstelle. Dadurch werden gleiche Lagerbedingungen an jeder Lagerstelle geschaffen. Analoges gilt für die Stützfläche des Teillaufringsegmentes.

Des Weiteren ist bevorzugt vorgesehen, dass die erste und zumindest eine weitere Lauffläche der zumindest einen weiteren Lagerstelle in Achslängsrichtung der Ausgleichswelle betrachtet bezüglich deren Umfangswinkel gleich ausgerichtet sind. Dadurch kann insbesondere eine Ausgleichswelle für die statische Unwucht im Motorengehäuse geschaffen werden. Gleichzeitig wird dadurch auch eine im Wesentlichen spiegelsymmetrische Anordnung zur Mittelebene der Ausgleichswelle ermöglicht. Ebenso gelten diese Ausführungen für das Laufringsegment.

Nach einer alternativen Ausgestaltung der Erfindung ist vorgesehen, dass die Laufflächen der Lagerstellen in Achslängsrichtung zueinander verdreht vorgesehen sind. Dadurch kann eine sogenannte Momentenunwucht ausgeglichen werden. Solche Ausgleichswellen werden insbesondere bei Motoren mit einer V-förmigen Zylinderanordnung oder einer ungeraden Zylinderanzahl eingesetzt. Beispielsweise können bei einer Ausgleichswelle von mit zwei Lagerstellen die Laufflächen dieser Lagerstellen um 180° zueinander verdreht vorgesehen sein. Sofern mehr als zwei Lagerstellen vorgesehen sind, wird die Ausrichtung der Laufflächen an die zu erzielende Momentenunwucht angepasst und entsprechend zur Mittelebene der Ausgleichswelle in radialer Wirkrichtung gegeneinander versetzt oder verdreht angeordnet, so dass die entsprechenden Momentenunwuchten erzeugt werden können.

Bevorzugt ist für eine Ausgleichwelle für die Momentenunwucht vorgesehen, dass diese im Wesentlichen punktsymmetrisch zur Mittelebene ausgebildet ist. Dadurch können definierte Kräfte entsprechend dem jeweiligen Hebelarm zur Mittelebene wirken, wodurch die Momentenunwucht exakt auf die entgegenzuwirkenden Kräfte anpassbar ist.

Nach einer weiteren bevorzugten Ausgestaltung ist vorgesehen, dass bei wenigstens zwei gegeneinander um die X-Achse beziehungsweise Längsachse der Ausgleichswelle verdreht zueinander angeordneten Laufflächen der Lagerstelle ein Überschneidungsbereich der Laufflächen vorgesehen ist. Die Endbereiche der Lauffläche überlagern sich bei einer Blickrichtung entlang der Längsachse bevorzugt geringfügig. Dadurch kann eine verlustarme Lagerung vorgesehen sein. Alternativ zu dieser Ausführungsform kann vorgesehen sein, dass ein Überschneidungsbereich zwischen dem Laufringsegment der einen Lagerstelle und der partiell ausgebildeten Lauffläche der weiteren Lagerstelle vorgesehen ist.

Nach einer weiteren bevorzugten Ausgestaltung der Erfindung ist vorgesehen, dass zumindest ein Unwuchtabschnitt einen Außenumfangsabschnitt aufweist, der mit einem größeren Durchmesser als derjenige der zumindest einen Lauffläche der Lagerstelle ausgebildet ist. Solche über den Außenumfang der Lauffläche hinausstehenden Unwuchtabschnitte sind bevorzugt an einem äußeren Endabschnitt der Ausgleichswelle vorgesehen, so dass eine einfache Montage erhalten bleibt. Solche Ausgleichswellen dienen ebenfalls zum Ausgleich der Momentenunwucht.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer ersten erfindungsgemäßen Ausführungsform einer Ausgleichswelle,
- Figur 2: eine schematische Seitenansicht der Ausgleichswelle gemäß Figur 1,
- Figur 3: eine schematische Schnittdarstellung entlang der Linie III-III in Figur 2,
- Figur 4: eine perspektivische Ansicht einer zweiten erfindungsgemäßen Ausführungsform einer Ausgleichswelle,
- Figur 5: eine schematische Seitenansicht der Ausgleichswelle gemäß Figur 4,
- Figur 6a: eine schematische Schnittdarstellung entlang der Linie V-V in Figur 5,
- Figur 6b: eine schematische Schnittdarstellung einer alternativen Ausführungsform zu Figur 5,
- Figur 7: eine perspektivische Ansicht einer dritten erfindungsgemäßen Ausführungsform einer Ausgleichswelle,
- Figur 8: eine schematische Schnittdarstellung entlang der Linie VII-VII in Figur 7,
- Figur 9: eine perspektivische Ansicht einer vierten erfindungsgemäßen Ausführungsform einer Ausgleichswelle,
- Figur 10: eine schematische Seitenansicht der Ausgleichswelle gemäß Figur 9,
- Figur 11: eine weitere schematische Seitenansicht der Ausgleichswelle gemäß Figur 9,
- Figur 12: eine perspektivische Ansicht einer fünften erfindungsgemäßen Ausführungsform einer Ausgleichswelle und
- Figur 13: eine schematische Seitenansicht der Ausgleichswelle gemäß Figur 12.

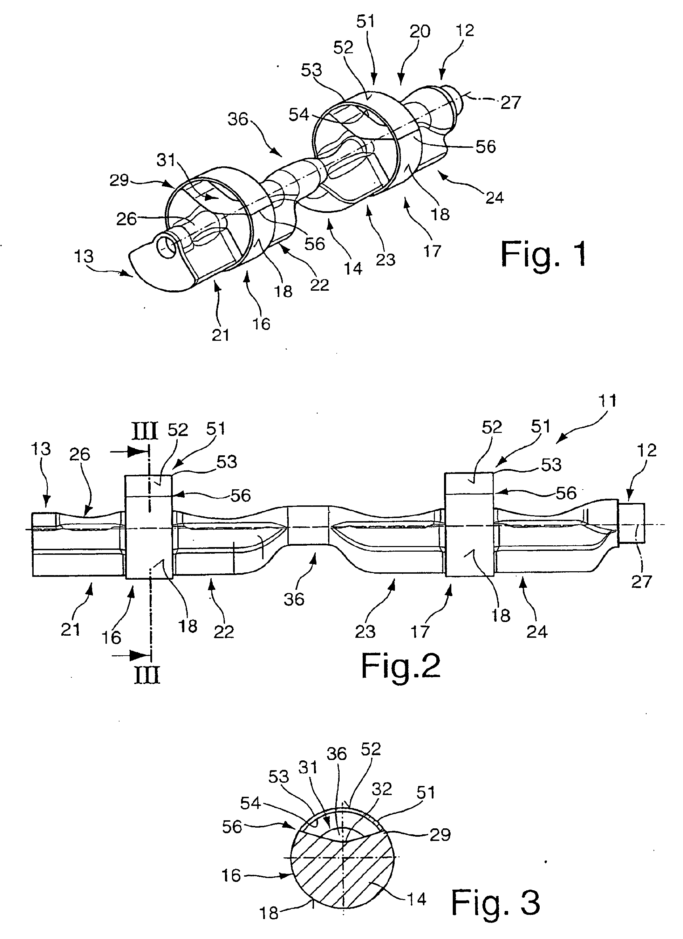

In Figur 1 ist perspektivisch eine erste Ausführungsform der erfindungsgemäßen Ausgleichswelle 11 dargestellt. Eine solche Ausgleichswelle 11 ist für einen Mehrzylindermotor vorgesehen und dient dem Ausgleich von Massenkräften zweiter Ordnung. Üblicherweise werden zwei Ausgleichswellen versetzt zueinander angeordnet, die dann in doppelter Motordrehzahl gegenläufig rotieren.

An einem in Figur 1 gezeigten hinteren Endabschnitt 12 ist der Ausgleichswelle 11 ein nicht näher dargestellter Antrieb, wie beispielsweise ein Kettenrad, vorgesehen, welches die Ausgleichswelle 11 antreibt. Die Ausgleichswelle 11 umfasst einen Grundkörper 14, an dem eine erste und zweite Lagerstelle 16, 17 vorgesehen sind. Diese dienen zur Lagerung der Ausgleichswelle 11 in einem Motorblock. Diese Lagerstellen 16, 17 weisen eine Lauffläche 18 auf, deren Umfang größer als ein Umfang der übrigen Abschnitte des Grundkörpers 14 ausgebildet sind. Dadurch kann die Ausgleichswelle 11 in die Lager beziehungsweise Lagerbuchsen im Motorblock eingeschoben werden, und zwar mit einem Endabschnitt 13 voraus.

Symmetrisch zur ersten und zweiten Lagerstelle 16, 17 sind Unwuchtgewichtsabschnitte 21 bis 24 vorgesehen, wobei die Unwuchtgewichtsabschnitte 22 und 23 fließend ineinander übergehen. Bei deren Dimensionierung sind die Endabschnitte 12 und 13 berücksichtigt. Der Grundkörper 14 weist Wandabschnitte 26 auf, die derart außerhalb einer Rotationsachse 27 der Ausgleichswelle 11 liegen, dass die Rotationsachse 27 in einer Querschnittsfläche der Lagerstelle 16, 17 liegt (Figur 3).

Die erste und zweite Lagerstelle 16, 17 weist eine partiell über den Umfang einer Legerstelle 16, 17 sich erstreckende Lauffläche 18 auf, wobei die Lauffläche 18 einen Umfangswinkel von 180° bis 359° umfasst. Durch diese Ausgestaltung wird dem Grunde nach ein sogenanntes Partiallager gebildet. Dieses Partiallager wird im Umfang durch ein Laufringsegment 51 komplettiert, welches eine Stützfläche 52 umfasst. Die Stützfläche 52 und Lauffläche 18 bilden eine gesamte Lauffläche 20, die einen Umfangswinkel von 360° aufweisen. Die Lauffläche 18 und Stützfläche 52 gehen bevorzugt stufenlos in Umfangsrichtung gesehen ineinander über.

Das Laufringsegment 51 ist in dessen Breite bevorzugt an die Lauffläche 18 angepasst. Die radial außenliegende Seitenkante 53 des Laufringsegmentes 51 geht bevorzugt bündig in die Lauffläche 18 über. Die radial innenliegende Seitenkante 54 des Laufringsegmentes 51 stützt sich auf einem Wandabschnitt 32 des Partiallagers ab. Das Laufringsegment 51 weist eine dünne Wandstärke auf, so dass das Laufringsegment 51 das Partiallager bogenförmig überspannt und im Umfang komplettiert. Bevorzugt ist die Wandstärke des Laufringsegmentes 51 gering gewählt, um einerseits eine maximale Gewichtsreduzierung zu erzielen und andererseits noch eine hinreichende Eigensteifigkeit aufzuweisen. Die Seitenkanten 53 und 54 können bei einem kreisbogenförmigen Randbereich zusammenfallen und einen äußersten Punkt als radial innere Seitenkante 54 bilden. Die Seitenkante 54 weist bevorzugt einen geradlinigen Verlauf auf. Alternativ kann die Seitenkante auch in axialer Richtung gewellt oder dergleichen ausgebildet sein. Die radial innere Seitenkante 54 des Laufringsegmentes 51 ist freitragend ausgebildet, das heißt, dass sich diese Seitenkante 54 an keinem weiteren Körperabschnitt der Ausgleichswelle 11 abstützt mit Ausnahme im Anschlussbereich 56 zur Lauffläche 18.

Im Ausführungsbeispiel gemäß den Figuren 1 bis 3 ist die Breite der Stützfläche 52 konstant über den Umfangswinkel des Laufringsegmentes 51 ausgebildet. Der Anschlussbereich 56 zwischen der Lauffläche 18 und dem Laufringsegment 51 ist als eine Art Stumpf-Stoßstelle ausgebildet. Bevorzugt wird das Laufringsegment 51 durch eine Schweißverbindung, insbesondere durch eine Press-Schweiß-Verbindung, zur partial ausgebildeten Lauffläche fixiert und nach dem Schweißvorgang nochmals auf Maß geschliffen, sofern dies erforderlich ist.

Im Ausführungsbeispiel gemäß Figur 3 liegt der Umfangswinkel der Lauffläche 18 beispielsweise in einem Bereich zwischen 190° und 220°. Der weitere Bereich wird durch das Laufringsegment 51 komplettiert. Die in den Figuren 1 bis 3 dargestellte erfindungsgemäße erste und zweite Lagerstelle 16, 17 ermöglicht, dass im Vergleich zu kreiszylindrischen gerstelle 16, 17 ermöglicht, dass im Vergleich zu kreiszylindrischen beziehungsweise scheibenförmigen Lagerstellen, die aus dem Stand der Technik bekannt sind, eine Lagerstelle 16, 17 mit einer erheblichen Gewichtseinsparung ausgestaltet ist. Gleichzeitig kann durch die über einen Umschlingungswinkel von 180° darüber hinaus ragenden Endbereiche 29 sichergestellt werden, dass ein einfacher Anlauf einer stillstehenden Ausgleichswelle 11 in einem Lager im Motorblock ermöglicht ist und dass insbesondere bei einem Stillstand der Ausgleichswelle in einer Position, in der die Unwuchtgewichtsabschnitte 21 bis 24 vertikal nach oben weisen, ein sicheres Anlaufen ohne Verkanten ermöglicht ist.

Die Lagerstelle 16, 17 weist im Querschnitt gemäß Figur 3 gesehen eine Vertiefung 31 auf, die V-, topf- oder wannenförmig ausgebildet ist. Die Geometrie kann an die erforderliche Steifigkeit, an das Maß der Unwucht und an die Anschlussstelle für das Laufringsegment 51 angepasst werden. Ein mittlerer Wandabschnitt 32 der Vertiefung 31 liegt oberhalb der Rotationsachse 27. An den mittleren Wandabschnitt 32 angrenzend sind Abflachungen vorgesehen, welche nach und nach in einem Kreisbogen übergehen, die den Unwuchtgewichtsabschnitt 21, 22, 23 und 24 begrenzen.

Alternativ kann vorgesehen sein, dass ein mittlerer Wandabschnitt 32 in der Rotationsachse 27 des Grundkörpers 14 liegt. Die Lauffläche 18 kann dabei sowohl einen Umfangswinkel von 180°, von größer 180° als auch kleiner 180° aufweisen. Diese Variation des Umschlingungswinkels kann auch bei der in Figur 3 dargestellten Ausführungsform bezüglich der Anordnung des Wandabschnittes 32 zur Rotationsachse 27 vorgesehen sein.

Die Lagerstellen 16, 17 sind gemäß dem Ausführungsbeispiel in Figur 1 durch einen sogenannten Lünettenangriffsabschnitt 36 miteinander verbunden. Zur Reduzierung der Unwucht sind fließende Übergänge von den Unwuchtgewichtsabschnitten 22 und 23 zu einem Lünettenangriffsabschnitt 36 gegeben, der während der Herstellung solcher Ausgleichswellen 11 eine Stütze bildet, da die Ausgleichswelle 11 zur Bearbeitung zwischen Spitzen gelagert ist.

Bei der in den Figuren 1 bis 3 dargestellten Ausgleichswelle 11 sind die Lagerstellen 16 und 17 zur Bildung eines Gleitlagers, insbesondere bei einer gehäuseseitigen Schmierung, ausgebildet. Diese Lagerstellen 16 und 17 können auch zur Bildung eines Wälzlagers in dem Motorblock ausgebildet sein. Die Lagerstellen am Motorblock können beispielsweise Zylinderrollen oder Rollen mit einer Nadelhülse umfassen.

Durch die in den Figuren 1 bis 3 dargestellte Ausgleichswelle werden insbesondere Massenkräfte, die eine statische Unwucht erzeugen, ausgeglichen, wie diese beispielsweise bei Vierzylinder-Reihenmotoren auftreten. Dadurch kann eine statische Unwucht ausgeglichen, welche beispielsweise in einer Y-Achse wirkt, welche senkrecht zur Z-Achse steht, wobei die X-Achse die Längsachse der Ausgleichswelle 11 bildet.

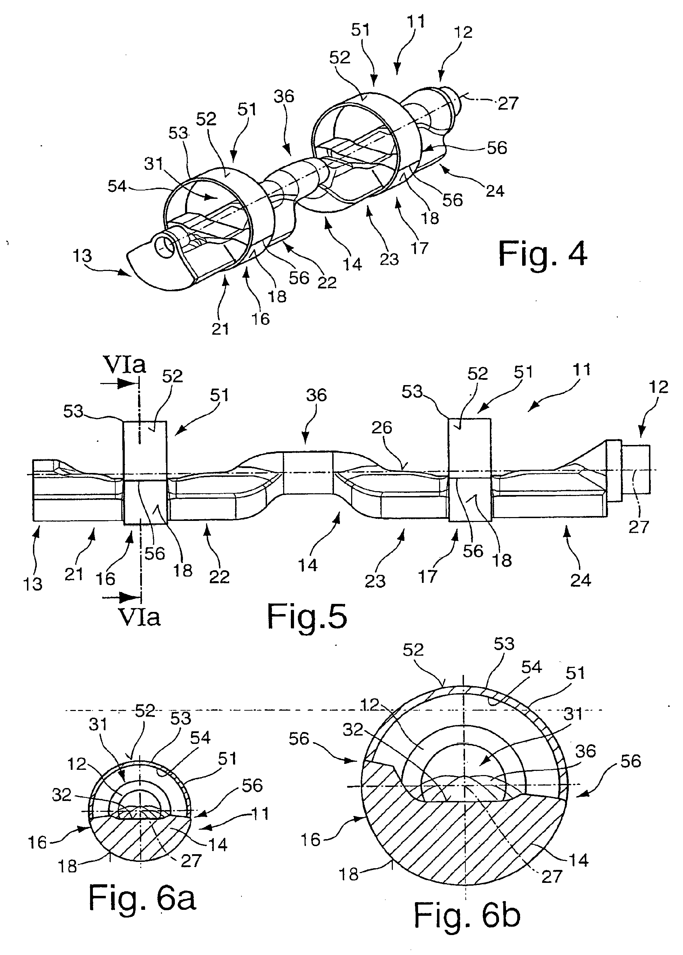

In den Figuren 4 bis 6 ist eine alternative Ausführungsform einer Ausgleichswelle 11 zu Figur 1 dargestellt. Bei dieser Ausgleichswelle 11 ist der Grundkörper 14 modifiziert und wie in Figur 6a dargestellt, die Lagerstelle 16, 17 abweichend von Figur 3 ausgebildet.

Die Lagerstelle 16, 17 umfasst eine Vertiefung 31, die beispielsweise wannenförmig ausgebildet ist, wobei ein mittlerer Wandabschnitt 32, der zusammen mit der Vertiefung 31 und der partiell über den Umfang der Lagerstelle 16, 17 sich erstreckende Lauffläche 18 eine Querschnittsfläche bildet, die außerhalb der Rotationsachse 27 liegt. Bei einer solchen Ausführungsform wird das Gewicht der Lagerstelle 16, 17 gegenüber der Ausführungsform in Figur 3 noch weiter reduziert. Die damit verbundene Reduzierung der Unwucht wird dadurch kompensiert, dass im Vergleich an einer oder mehreren Stellen weniger Masse vorgesehen wird, die einen größeren Abstand zur Rotationsachse hat. Dieses Prinzip ermöglicht eine weitere Reduzierung der Gesamtmasse. Dabei ist bevorzugt vorgesehen, dass fließend weiche Übergänge von den Endabschnitten 12, 13 jeweils zum mittleren Wandabschnitt 32 der Lagerstelle 16, 17 vorgesehen sind. Solche weichen Übergänge sind ebenfalls zur Mitte der Ausgleichswelle 11 vorgesehen, welche einen Lünettenangriffsabschnitt 36 umfasst. Während der Herstellung solcher Ausgleichswellen 11, die zwischen Spitzen an den Endabschnitten 12 und 13 drehbar gelagert ist, greift eine Haltevorrichtung beziehungsweise Lünette zusätzlich an dem Lünettenangriffsabschnitt 36 an, um eine präzise Ausgestaltung der Lauffläche 18 während der Bearbeitung der Ausgleichswelle zu ermöglichen.

Eine in den Figuren 4 bis 6a dargestellte Ausgleichswelle 11 ist auf einem maximalen Leichtbau ausgelegt. In Abhängigkeit der verwendeten Materialien kann ein Mindestmaß an Steifigkeit und Biegefestigkeit in Längsrichtung der Ausgleichswelle 11 erzielt werden. Die Unwuchtgewichtsabschnitte 21, 22 sowie 23 und 24 sind symmetrisch zur Lagerstelle 16, 17 angeordnet, wobei jeweils deren weiterer Verlauf des Grundkörpers 14, wie beispielsweise der der Endabschnitte 12, 13 sowie der des Lünettenangriffsabschnitt 36, in die Auslegung der Masse der Unwuchtgewichtsabschnitte 21, 22, 23, 24 einfließt. Der kreissegmentförmige Querschnitt der Unwuchtgewichtsabschnitte 21, 22, 23, 24 weist den Vorteil auf, dass dadurch das Unwuchtgewicht weit exzentrisch außerhalb der Rotationsachse 27 positioniert werden kann.

In Figur 6b ist eine alternative Ausführungsform zu Figur 6a dargestellt. Dabei kann vorgesehen sein, dass die Lauffläche 18 asymmetrisch zu dem weiteren Aufbau der Ausgleichswelle ausgebildet und dementsprechend angepasst die Stützfläche 52 des Laufringsegmentes 51 ebenfalls asymmetrisch ausgebildet ist. Dadurch kann die Kraftresultierende der Zentrifugalkraft in einer vorbestimmten Richtung ausgerichtet werden.

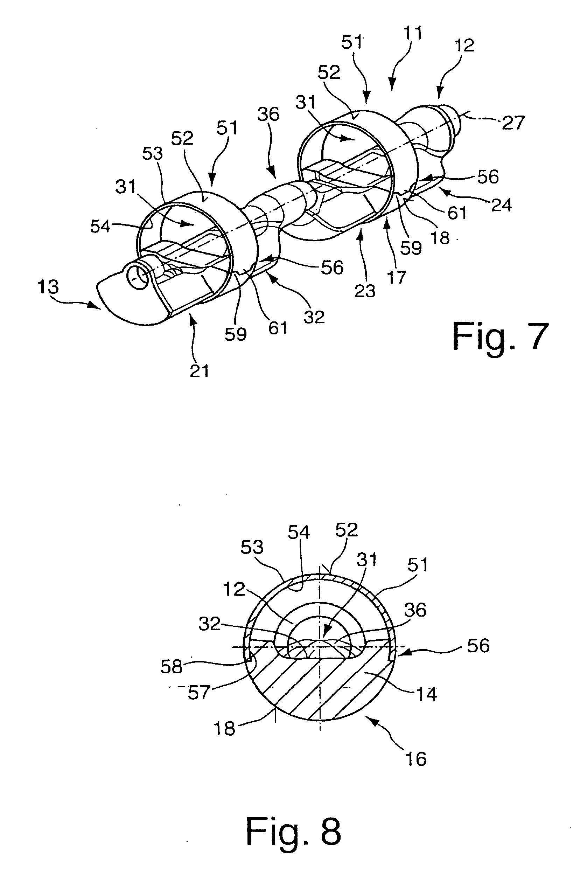

In den Figuren 7 und 8 ist eine weitere alternative Ausführungsform der Erfindung vorgesehen. Der Anschlussbereich 56 ist dabei derart ausgebildet, dass eine Stirnseite 58 des Laufringsegmentes 51 bündig an der durch die eine gegenüber der Lauffläche 18 zurückversetzten Anlagefläche 57 ausgebildeten Stufe anliegt und somit einen stufenlosen Übergang zwischen der Lauffläche 18 und der Stützfläche 51 ermöglicht ist. Gleichzeitig wird in diesem Übergangsbereich das Laufringsegment 51 durch die partielle Lauffläche 18 unterstützt, so dass eine stabile Anordnung gegeben ist. Darüber hinaus wird für eine solche Anordnung bevorzugt eine erleichterte Fixierung des Laufringsegmentes 52 zur partiell ausgebildeten Lauffläche 18 ermöglicht.

Im Anschlussbereich 56 sind des Weiteren Positionierelemente 59 vorgesehen, die eine dazwischen liegende Vertiefung ausbilden, in welche eine Nase 61 des Laufringsegmentes 51 eingreift. Dadurch kann eine lagerichtige Vorfixierung des Laufringsegmentes 51 in axialer Richtung zur Lauffläche 18 gegeben sein. Gleichzeitig wird die lagerichtige Anordnung in Umfangsrichtung unterstützt. Des Weiteren kann vorgesehen sein, dass in radialer Richtung zur Rotationsachse hin eine Vertiefung vorgesehen ist, in welche ein radial zur Rotationsachse weisender Vorsprung an einer Innenseite des Laufringsegmentes 51 eingreift. Die vorbeschriebenen Ausführungsformen zur Positionierung des Laufringsegmentes 51 in axialer, radialer Richtung sowie in Umfangsrichtung können auch nur einzeln oder beliebig miteinander kombinierbar vorgesehen sein.

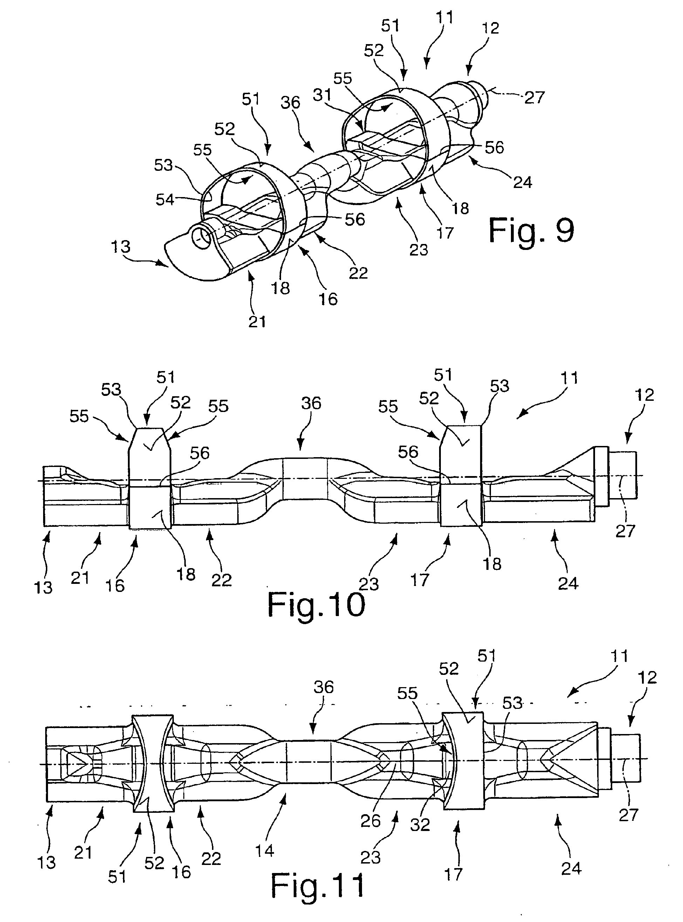

In den Figuren 9 bis 11 ist eine weitere alternative Ausführungsform der Ausgleichswelle 11 dargestellt. Bei dieser Ausgleichswelle 11, die beispielsweise zwei Lagerstellen 16, 17 umfasst, sind die Laufringsegmente 51 in der Geometrie voneinander abweichend ausgebildet. Beispielsweise weist das Laufringsegment 51 der Lagerstelle 17 eine nur einseitige Verjüngung 55 des Querschnittes auf. Das Laufringsegment 51 der Lagerstelle 16 hingegen weist eine beidseitige Verjüngung 55 in der Breite des Laufringsegmentes 51, insbesondere zum Scheitelpunkt hin, auf. Solche Verjüngungen 55 können beispielsweise durch fließende Übergänge in Form von Kreissegmenten oder Bogensegmenten vorgesehen sein. Durch solche Verjüngungen 55 wird eine Reduzierung in der Reibung als auch eine Gewichtsreduzierung erzielt.

Bei einer alternativen, nicht näher dargestellten Ausführungsform ist die Vertiefung mit einem türbinenradförmigen oder asymmetrischen Querschnitt ausgebildet.

Die Ausgestaltung der Vertiefung beziehungsweise der Freischnitt der partiell ausgebildeten Lagestelle ist in der Form, Größe und/oder Geometrie an den jeweiligen Anwendungsfall anpassbar, wobei eine Vielzahl von Ausgestaltungsmöglichkeiten vorgesehen sein können.

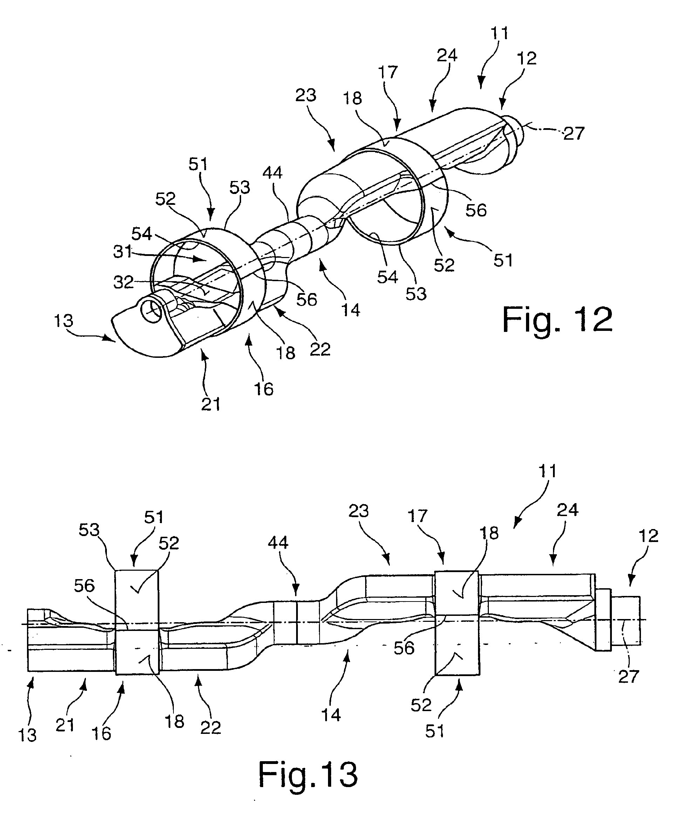

In den Figuren 12 und 13 ist eine weitere alternative Ausführungsform einer Ausgleichswelle 11 dargestellt. Diese Ausgleichswelle 11 unterscheidet sich zu denjenigen in den vorstehenden Figuren dadurch, dass die Unwuchtgewichtsabschnitte 21, 22, 23, 24 und Lagerstellen 16, 17 zur Mittelebene 44 im Wesentlichen punktsymmetrisch ausgebildet sind. Die Mittelebene 44 steht senkrecht zur X-Achse beziehungsweise Rotations- oder Längsachse der Ausgleichswelle 11. Eine solche Ausgleichswelle 11 wird im Unterschied zu den vorstehenden Ausgleichswellen 11 gemäß den Figuren 1 bis 11 zum Momentenunwuchtsausgleich eingesetzt. Eine solcher Momentenunwuchtsausgleich ist bei Motoren mit beispielsweise einer V-förmigen Zylinderanordnung, wie bei V3- oder V6-Motoren oder Reihenmotoren mit ungerader Zylinderanzahl, vorgesehen. Bei dieser Ausführungsform ist bevorzugt der Umfangswinkel der Lauffläche 18 jeder Lagerstelle 16, 17 derart ausgebildet, dass in der Rotationsachse der Ausgleichswelle 11 gesehen zumindest ein Endbereich 29 der Lauffläche 18 sich überlappt. Im Übrigen gelten die Ausführungen zu den vorstehenden Figuren.

Bei einer weiteren alternativen, nicht näher dargestellten Ausführungsform als Alternative zu der Ausgleichswelle 11 gemäß den Figuren 12 und 13 ist an einem Ende der Ausgleichswelle 11 ein Unwuchtgewichtsabschnitt 46 vorgesehen, der zumindest abschnittsweise einen Außenumfang aufweist, welcher im Durchmesser größer als der Durchmesser der Lauffläche 18 ausgebildet ist. Dieser Unwuchtgewichtsabschnitt 46 ist als scheibenförmige Unwuchtmasse beziehungsweise als Teilsegment einer scheibenförmigen Unwuchtmasse ausgebildet. Die Anordnung einer solchen Unwuchtmasse an einem äußeren Ende der Ausgleichswelle 11 weist den Vorteil auf, dass eine einfache Montage der Ausgleichswelle 11 erhalten bleibt. Im Übrigen gelten die Ausführungen zu den vorstehenden Figuren. Der Unwuchtgewichtsabschnitt 46 kann zusätzlich zu den am äußeren Ende liegenden Unwuchtgewichtsabschnitten 21, 24 ausgebildet sein oder diese umfassen.

Die vorstehend beschriebenen Ausgleichswellen 11 können auch beliebig miteinander in einem Motor kombiniert werden. Dies ist abhängig von der Motorenkonstruktion, so dass die Auslegung der Ausgleichswelle oder der Ausgleichswellen an die auszugleichende statische Unwucht und/oder Momentenunwucht anpassbar ist. Ebenso können einzelne Merkmale von einzelnen Ausgleichswellen 11 miteinander kombiniert werden.

Alle vorbeschriebenen Ausführungsbeispiele haben gemeinsam, dass der Schwerpunkt der Ausgleichswelle 11 spätestens im montieren Zustand einen Schwerpunkt in einer Mitte des Ein- oder Mehrzylindermotors bezogen auf dessen Längsrichtung umfasst. Des Weiteren ist allen Ausführungsformen gemeinsam, dass das Laufringsegment 51 zumindest eine frei tragende Seitenkante 54 umfasst, welche die Vertiefung 31 der partial ausgebildeten Lauffläche 18 überspannt. Dadurch ist die gesamte Lauffläche 20, bestehend aus der Stützfläche 52 und partiell ausgebildeten Lauffläche 18, unabhängig von einer benachbarten Lagerstelle bei einer gleichzeitigen Maximierung der Gewichtsreduzierung.

Alle vorbeschriebenen Merkmale sind jeweils für sich erfindungswesentlich und können beliebig miteinander kombiniert werden.

## Patentansprüche

1. Ausgleichswelle für einen Ein- oder Mehrzylindermotor mit wenigstens einem Unwuchtgewichtsabschnitt (21, 22; 23, 24) und wenigstens einer Lagerstelle (16, 17), wobei der wenigstens eine Unwuchtgewichtsabschnitt (21, 22; 23, 24) der Lagerstelle (16, 17) zugeordnet ist und die Lagerstelle (16, 17) eine radiale Lauffläche (18) aufweist, welche sich nur partiell über einen Umfang der Lagerstelle (16, 17) erstreckt und eine bei Rotation der Ausgleichswelle (11) resultierende Zentrifugalkraft innerhalb einem Bereich der Lagerstelle (16, 17) liegt, der durch die partiell über den Umfang der Lagerstelle (16, 17) sich erstreckende Lauffläche (18) gebildet ist, **dadurch gekennzeichnet, dass** der partiell ausgebildeten Lauffläche (18) ein Laufringsegment (51) zugeordnet ist, welches an die partiell ausgebildete Lauffläche (18) der Lagerstelle (16, 17) anschließt und mit der partiell ausgebildeten Lauffläche (18) eine vollständig geschlossene Lauffläche (20) der Lagerstelle (16, 17) bildet und zumindest eine, die Breite des Laufringsegmentes (51) begrenzende Seitenkante (54) aufweist, welche die partiell ausgebildete Lauffläche (18) überspannt und freitragend vorgesehen ist.

2. Ausgleichswelle nach Anspruch 1, **dadurch gekennzeichnet, dass** das Laufringsegment und die partiell ausgebildete Lauffläche (18) der Lagerstelle (16, 17) form- und/oder kraftschlüssig verbunden sind oder dass das Laufringsegment mit der partiell ausgebildeten Lagerfläche (18) der Lagerstelle (16, 17) stoffschlüssig, insbesondere durch Schweißen oder Löten, verbunden ist.

3. Ausgleichswelle nach Anspruch 1, **dadurch gekennzeichnet, dass** die partiell ausgebildete Lauffläche (18) der Lagerstelle (16, 17) einen Umfangswinkel größer 180° aufweist und vorteilhafterweise sich innerhalb diesem Umfangswinkel durchgehend erstreckt oder dass die partiell ausgebildete Lauffläche (18) der Lagerstelle (16, 17) einen Umfangswinkel aufweist, der gleich oder kleiner 180° ist und vorteilhafterweise sich innerhalb diesem Umfangswinkel durchgehend erstreckt.

4. Ausgleichswelle nach Anspruch 1, **dadurch gekennzeichnet, dass** das Laufringsegment (51) eine Stützfläche (52) mit einer konstanten Breite aufweist und die Breite der Stützfläche (52) vorzugsweise der Breite der Lauffläche (18) entspricht oder dass eine Stützfläche (52) des Laufringsegmentes (51) ein- oder beidseitig in der Breite sich verjüngend ausgebildet ist und vorzugsweise im Scheitelpunkt des Laufringsegmentes (51) den engsten Querschnitt aufweist.

5. Ausgleichswelle nach Anspruch 1, **dadurch gekennzeichnet, dass** in einem Anschlussbereich (56) des Laufringsegmentes (51) zur Lauffläche (18) eine Anlagefläche (57) vorgesehen ist, die gegenüber der Lauffläche (18) in Richtung zur Rotationsachse zurückversetzt ist.

6. Ausgleichswelle nach Anspruch 1, **dadurch gekennzeichnet, dass** im Anschlussbereich (56) des Laufringsegmentes (51) zur Lauffläche (18) zumindest ein in Umfangsrichtung oder radialer Richtung sich erstreckendes Positionierelement vorgesehen ist, welches das Laufringsegment (51) zumindest axial zur Lauffläche (18) positioniert.

7. Ausgleichswelle nach einem der vorhergehenden Ansprüche, **dadurch gekennzeichnet, dass** die Lauffläche (18) und Stützfläche (52) ballig ausgebildet sind.

8. Ausgleichswelle nach einem der vorhergehenden Ansprüche, **dadurch gekennzeichnet, dass** die Lagerstelle (16, 17) im Querschnitt zur Längsrichtung der Ausgleichswelle (11) gesehen eine Vertiefung (31), insbesondere eine V-förmige, W-förmige, wannenförmige oder topfförmige Vertiefung, aufweist, welche von dem Laufringsegment (51) überspannt ist.

9. Ausgleichswelle nach Anspruch 8, **dadurch gekennzeichnet, dass** die Vertiefung (31) symmetrisch zur Längsrichtung der Ausgleichswelle (11) ausgebildet ist und/oder dass die Lauffläche (18) der Lagerstelle (16, 17) und die sich daran anschließende Vertiefung (31) eine Querschnittsfläche bilden, bei der die Rotationsachse (27) innerhalb dieser Querschnittsfläche liegt und/oder die Vertiefung (31) zumindest einen mittleren Wandabschnitt (32) aufweist, der in der Rotationsachse (27) der Ausgleichswelle (11) liegt und/oder die Lauffläche (18) der Lagerstelle (16, 17) und die sich daran anschließende Vertiefung (31) eine Querschnittsfläche bilden, bei der die Rotationsachse (27) außerhalb dieser Querschnittsfläche liegt und/oder dass eine Vertiefung (31) mit der Lauffläche (18) der Lagerstelle (16, 17) einen turbinenradförmigen oder asymmetrischen Querschnitt bildet.

10. Ausgleichswelle nach einem der vorhergehenden Ansprüche, **dadurch gekennzeichnet, dass** die partiell ausgebildete Lauffläche (18) der Lagerstelle (16, 17) sich symmetrisch zur resultierenden Zentrifugalkraft bei der Rotation der Ausgleichswelle (11) erstreckt und vorzugsweise dass die Laufflächenbreite der Lagerstelle (16, 17) sich zu Endbereichen (29) der partiell ausgebildeten Lauffläche (18) zumindest abschnittsweise verjüngt.

11. Ausgleichswelle nach einem der vorhergehenden Ansprüche, **dadurch gekennzeichnet, dass** ein Umfangswinkel der Lauffläche (18) oder des Laufringsegmentes (51) der ersten Lagerstelle (16; 17) gleich zum Umfangswinkel der Lauffläche (18) oder des Laufringsegmentes (51) von zumindest einer weiteren Lagerstelle (16; 17) ist.

12. Ausgleichswelle nach einem der vorhergehenden Ansprüche, **dadurch gekennzeichnet, dass** die erste und zumindest eine weitere Lauffläche (18) oder das erste und zumindest eine weitere Laufringsegment (51) der Lagerstellen (16, 17) in Achslängsrichtung betrachtet bezüglich deren Umfangswinkel gleich ausgerichtet sind oder dass zumindest eine Lagerstelle (16, 17), deren Lauffläche (18) sowie ein Unwuchtgewichtsabschnitt (21, 22; 23, 24) punktsymmetrisch zur Mittelebene (44) der Ausgleichswelle (11) angeordnet sind.

13. Ausgleichswelle nach einem der Ansprüche 1 bis 11, **dadurch gekennzeichnet, dass** die erste und zumindest eine weitere Lauffläche (18) oder das zumindest eine Laufringsegment (51) der Lagerstellen (16, 17) in Achslängsrichtung betrachtet zueinander verdreht angeordnet sind und vorzugsweise dass die zueinander verdreht angeordneten Laufflächen (18) der ersten und zumindest einen weiteren Lagerstelle (16, 17) in Achslängsrichtung gesehen einen Überschneidungsbereich aufweisen.

14. Ausgleichswelle nach einem der vorhergehenden Ansprüche, **dadurch gekennzeichnet, dass** zumindest ein Unwuchtgewichtsabschnitt (46) vorgesehen ist, der zumindest einen Außenumfangsabschnitt mit einem größeren Durchmesser aufweist als derjenige Durchmesser der zumindest einen Lauffläche (18) der Lagerstelle (16, 17).

15. Ausgleichswelle nach Anspruch 14, **dadurch gekennzeichnet, dass** der Unwuchtgewichtsabschnitt (46) an einem äußeren Ende des Grundkörpers (14) vorgesehen ist.

## Claims

1. A balancing shaft for a single-cylinder or multicylinder engine having at least one unbalanced weight portion (21, 22; 23, 24) and at least one bearing (16, 17), the at least one unbalanced weight portion (21, 22; 23, 24) being associated with the bearing (16, 17) and the bearing (16, 17) has a radial running face (18) which extends only partially over a periphery of the bearing (16, 17) and a centrifugal force which results during rotation of the balancing shaft (11) is situated within a region of the bearing (16, 17) that is formed by the running face (18) which extends partially over the periphery of the bearing (16, 17), **characterized in that** a running ring segment (51) is associated with the partially formed running face (18), said running ring segment adjoining the partially formed running face (18) of the bearing (16, 17) and forming, together with said partially formed running face (18), a completely closed running face (20) of the bearing (16, 17) and having at least one lateral edge (54) which delimits the width of the running ring segment (51) and which spans the partially formed running face (18) and is provided in an unsupported manner.

2. The balancing shaft as claimed in claim 1, **characterized in that** the running ring segment and the partially formed running face (18) of the bearing (16, 17) are joined by a positive and/or a non-positive connection or that the running ring segment is joined together with the partially formed running face (18) of the bearing (16, 17) by a material-uniting connection, in particular by means of welding or soldering.

3. The balancing shaft as claimed in claim 1, **characterized in that** the partially formed running face (18) of the bearing (16, 17) has a peripheral angle of more than 180 ° and advantageously extends continuously within this peripheral angle or the partially formed running face (18) of the bearing (16, 17) has a peripheral angle of equal to, or smaller than 180 ° and advantageously extends continuously within this peripheral angle.

4. The balancing shaft as claimed in claim 1, **characterized in that** the running ring segment (51) has a supporting surface (52) with a constant width and that the width of the supporting surface (52) preferably corresponds to the width of the running face (18) or that a supporting surface (52) of the running ring segment (51) is formed so as to taper in width on one or on both sides, and preferably has its narrowest cross-section in the vertex of the running ring segment (51).

5. The balancing shaft as claimed in claim 1, **characterized in that**.a contact surface (57) is provided in the connection zone (56) of the running ring segment (51) leading to the running face (18), which contact surface is offset backward in the direction of the axis of rotation with respect to the running face (18).

6. The balancing shaft as claimed in claim 1, **characterized in that** at least one locating member (57) extending in the peripheral direction or in the radial direction is provided in the connection zone (56) of the running ring segment (52) leading to the running face (18), which locating member positions the running ring segment (51) at least axially with respect to the running face (18).

7. The balancing shaft as claimed in one of the preceding claims, **characterized in that** the running face (18) and the supporting surface (52) are spherical in their configuration.

8. The balancing shaft as claimed in one of the preceding claims, **characterized in that** the bearing (16, 17) has, viewed in cross section to the longitudinal direction of the balancing shaft (11), a depression (31), in particular a V-shaped, W-shaped, tub-shaped or cup-shaped depression, which is spanned by the running ring segment (51).

9. The balancing shaft as claimed in claim 8, **characterized in that** the depression (31) is configured symmetrically to the longitudinal direction of the balancing shaft (11) and/or that the running face (18) of the bearing (16, 17) and the depression (31) adjoining it form a cross-sectional surface in which the axis of rotation (27)- lies within this cross-sectional surface and/or the depression (31) has at least one central wall portion (32) which is situated in the axis of rotation (27) of the balancing shaft (11) and/or the running face (18) of the bearing (16, 17) and the depression (31) adjoining it form a cross-sectional surface in which the axis of rotation (27) lies outside this cross-sectional surface and/or that a depression (31) forms with the running face (18) of the bearing (16, 17) a turbine wheel-like or an asymmetrical cross section.

10. The balancing shaft as claimed in one of the preceding claims, **characterized in that** the partially configured running face (18) of the bearing (16, 17) extends symmetrically to the resulting centrifugal force during the rotation of the balancing shaft (11) and preferably that the running-face width of the bearing (16, 17) tapers, at least in certain portions, to end regions (29) of the partially configured running face (18).

11. The balancing shaft as claimed in one of the preceding claims, **characterized in that** a peripheral angle of the running face (18) or of the running ring segment (51) of the first bearing (16; 17) is equal to the peripheral angle of the running face (18) or of the running ring segment (51) of at least one further bearing (16; 17).

12. The balancing shaft as claimed in one of the preceding claims, **characterized in that** the first and at least one further running face (18) or the first or at least one further running ring segment (51) of the bearings (16, 17) are of the same orientation, viewed in the longitudinal direction of the axis, with respect to the peripheral angle thereof, or that at least one bearing (16, 17), the running face (18) thereof and an unbalanced weight portion (21, 22; 23, 24) are arranged point-symmetrically to the center plane (44) of the balancing shaft (11).

13. The balancing shaft as claimed in one of claims 1 to 11, **characterized in that** the first and at least one further running face (18) or the at least one further running ring segment (51) of the bearings (16, 17) are arranged, viewed in the longitudinal direction of the axis, rotated relative to one another and preferably that the running faces (18), which are arranged rotated relative to one another, of the first and at least one further bearing (16, 17) have, viewed in the longitudinal direction of the axis, an overlap region.

14. The balancing shaft as claimed in one of the preceding claims, **characterized in that** at least one unbalanced weight portion (46) is provided, which has at least one outer peripheral portion having a larger diameter than that diameter of the at least one running face (18) of the bearing (16, 17).

15. The balancing shaft as claimed in claimed 14, **characterized in that** the unbalanced weight portion (46) is provided at an outer end of the basic element (14).

## Revendications

1. Arbre d'équilibrage pour un moteur mono- ou polycylindrique avec au moins une partie de contrepoids (21, 22; 23, 24) et au moins un point d'appui (16, 17), ladite au moins une partie de contrepoids (21, 22; 23, 24) étant affectée au point d'appui (16, 17) et le point d'appui (16, 17) présentant une surface de roulement radiale (18) qui s'étend seulement de manière partielle sur une circonférence du point d'appui (16, 17) et une force centrifuge résultant de la rotation de l'arbre d'équilibrage (11) étant située à l'intérieur d'une zone du point d'appui (16, 17) laquelle est formée par la surface de roulement (18) s'étendant de manière partielle sur la circonférence du point d'appui (16, 18), **caractérisé en ce qu'**à la surface de roulement (18) partiellement formée est affectée un segment de bague de roulement (51) lequel est contigu à la surface de roulement (18) partiellement formée du point d'appui (16, 17) et forme, avec la surface de roulement (18) partiellement formée, une surface de roulement (20) complètement fermée du point d'appui (16, 17) et lequel présente au moins un bord latéral (54) prévu de manière non soutenue qui délimite la largeur du segment de bague de roulement (51) et recouvre la surface de roulement (18) partiellement formée.

2. Arbre d'équilibrage selon la revendication 1, **caractérisé en ce que** le segment de bague de roulement et la surface de roulement (18) partiellement formée du point d'appui (16, 17) sont assemblés par conjugaison de forme et/ou conjugaison de force et **en ce que** le segment de bague de roulement est assemblé à la surface de roulement (18) partiellement formée du point d'appui (16, 17) par conjugaison de matières, notamment par soudage ou brasage.

3. Arbre d'équilibrage selon la revendication 1, **caractérisé en ce que** la surface de roulement (18) partiellement formée du point d'appui (16, 17) présente un angle inscrit supérieur à 180° et s'étend, de manière avantageuse, de part en part à l'intérieur dudit angle inscrit ou **en ce que** la surface de roulement (18) partiellement formée du point d'appui (16, 17) présente un angle inscrit qui est égal ou inférieur à 180° et qui s'étend, de manière avantageuse, de part en part à l'intérieur dudit angle inscrit.

4. Arbre d'équilibrage selon la revendication 1, **caractérisé en ce que** le segment de bague de roulement (51) présente une surface de support (52) d'une largeur constante et que la largeur de la surface de support (52) correspond, de préférence, à la largeur de la surface de roulement (18) ou **en ce qu'**une surface de support (52) du segment de bague de roulement (51) est formée de manière telle que sa largeur diminue d'un seul côté ou des deux côtés et présente, de préférence, la section la plus étroite au sommet du segment de bague de roulement (51).

5. Arbre d'équilibrage selon la revendication 1, **caractérisé en ce que** dans une zone de jointure (56) entre le segment de bague de roulement (51) et la surface de roulement (18) est prévue une surface de contact (57) qui est décalée, par rapport à la surface de roulement (18), en direction de l'axe de rotation.

6. Arbre d'équilibrage selon la revendication 1, **caractérisé en ce que** dans la zone de jointure (56) entre le segment de bague de roulement (51) et la surface de roulement (18) est prévu au moins un élément de positionnement s'étendant en sens circonférentiel ou en sens radial lequel positionne le segment de bague de roulement (51) au moins de manière axiale à la surface de roulement (18).

7. Arbre d'équilibrage selon l'une quelconque des revendications précédentes, **caractérisé en ce que** la surface de roulement (18) et la surface de support (52) sont de forme bombée.

8. Arbre d'équilibrage selon l'une quelconque des revendications précédentes, **caractérisé en ce que** le point d'appui (16, 17) présente, vu en coupe transversale par rapport au sens longitudinal de l'arbre d'équilibrage (11), un creux (31), en particulier en forme de V, en forme de W, en forme de bac ou en forme de pot, qui est recouvert par le segment de bague de roulement (51).

9. Arbre d'équilibrage selon la revendication 8, **caractérisé en ce que** le creux (31) est réalisé de manière symétrique au sens longitudinal de l'arbre d'équilibrage (11) et/ou **en ce que** la surface de roulement (18) du point d'appui (16, 17) et le creux (31) qui lui est contigu forment une surface de section transversale telle que l'axe de rotation (27) est située à l'intérieur de ladite surface de section transversale et/ou **en ce que** le creux (31) présente au moins une partie de paroi médiane (32) qui est située dans l'axe de rotation (27) de l'arbre d'équilibrage (11) et/ou **en ce que** la surface de roulement (18) du point d'appui (16, 17) et le creux (31) qui lui est contigu forment une surface de section transversale telle que l'axe de rotation (27) est situé à l'extérieur de ladite surface de section transversale et/ou **en ce qu'**un creux (31) forme, avec la surface de roulement (18) du point d'appui (16, 17), une section transversale asymétrique ou en forme de roue de turbine.

10. Arbre d'équilibrage selon l'une quelconque des revendications précédentes, **caractérisé en ce que** la surface de roulement (18) partiellement formée du point d'appui (16, 17) s'étend symétriquement à la force centrifuge résultant de la rotation de l'arbre d'équilibrage (11), et de préférence **en ce que** la largeur de surface de roulement du point d'appui (16, 17) diminue au moins partiellement vers des zones d'extrémité (29) de la surface de roulement (18) partiellement formée.

11. Arbre d'équilibrage selon l'une quelconque des revendications précédentes, **caractérisé en ce qu'**un angle inscrit de la surface de roulement (18) ou du segment de bague de roulement (51) du premier point d'appui (16; 17) est égal à l'angle inscrit de la surface de roulement (18) ou du segment de bague de roulement (51) d'au moins un autre point d'appui (16; 17).

12. Arbre d'équilibrage selon l'une quelconque des revendications précédentes, **caractérisé en ce que** la première et ladite au moins une autre surface de roulement (18) ou le premier et ledit au moins un autre segment de bague de roulement (51) des points d'appui (16, 17) sont, vu(e)s dans le sens longitudinal de l'axe, orienté(e)s de manière identique quant à leur angle inscrit, ou **en ce qu'**au moins un point d'appui (16, 17), la surface de roulement (18) de celui-ci ainsi qu'une partie de contrepoids (21, 22; 23, 24) sont disposés de manière centro-symétrique par rapport au plan central (44) de l'arbre d'équilibrage (11).

13. Arbre d'équilibrage selon l'une quelconque des revendications 1 à 11, **caractérisé en ce que** la première et ladite au moins une autre surface de roulement (18) ou ledit au moins un segment de bague de roulement (51) des points d'appui (16, 17) sont, vus dans le sens longitudinal de l'axe, déplacés angulairement l'un par rapport à l'autre, et de préférence **en ce que** les surfaces de roulement (18) du premier et dudit au moins un autre point d'appui (16, 17) ainsi déplacées angulairement l'une par rapport à l'autre présentent, vues dans le sens longitudinal de l'axe, une zone de superposition.

14. Arbre d'équilibrage selon l'une quelconque des revendications précédentes, **caractérisé en ce qu'**il est prévu au moins une partie de contrepoids (46) qui présente au moins une partie de circonférence extérieure avec un diamètre supérieur au diamètre de ladite au moins une surface de roulement (18) du point d'appui (16, 17).

15. Arbre d'équilibrage selon la revendication 14, **caractérisé en ce que** la partie de contrepoids (46) est prévue à une extrémité extérieure du corps de base (14).
